# EUROPÄISCHE PATENTSCHRIFT

(11) **EP 2 907 723 B1**
(45) Veröffentlichungstag und Bekanntmachung des Hinweises auf die Patenterteilung: **05.12.2018**
(21) Anmeldenummer: 15151935.2
(22) Anmeldetag: 21.01.2015
(51) Int. Cl.: B62B 5/00, B62B 3/14

(54) **Transportwagen**
Transport trolley
Chariot de transport

(30) Priorität: 06.02.2014 DE 102014101504
(43) Veröffentlichungstag der Anmeldung: 19.08.2015
(73) Patentinhaber: Wanzl Metallwarenfabrik GmbH, 89340 Leipheim (DE)
(72) Erfinder: Acikgöz, Ayhan, 89312 Günzburg (DE); Kraus, Bernd, 89356 Haldenwang (DE); Eichele, Hermann, 89340 Leipheim (DE); Müller, Ralf, 86657 Bissingen (DE); Gasche, Thomas, 89340 Leipheim (DE); Remmele, Stefan, 89340 Leipheim (DE); Riesenegger, Markus, 89358 Kammeltal (DE)

(56) Entgegenhaltungen:
- CH-A5- 568 051
- DE-A1- 19 528 499
- DE-U1-202005 007 300
- DE-U1-202009 008 782
- US-A- 4 114 727
- US-A1- 2004 262 864

## Beschreibung

Die Erfindung betrifft einen stapelbaren Transportwagen mit den Merkmalen im Oberbegriff des Hauptanspruchs.

Stapelbare Transportwagen sind aus dem Stand der Technik bekannt. Ein solcher weist ein Fahrgestell mit Rollen und mit Holmen auf. An den Holmen ist ein Korb angeordnet, der meist aus Draht hergestellt ist. Ferner ist das Fahrgestell mit einem Schiebegriff ausgestattet, an dem ein Münzpfandschloss angebracht sein kann. Auch weist das Fahrgestell eine Ladeplattform auf.

Aus der DE 195 28 499 A1 ist eine fahrbare Einkaufs- und Kassenpackmulde bekannt, die einen Drahtkorb mit trapezförmigen Seitenwänden aufweist.

Die US 4,114,727 betrifft ein Einkaufswagentransportsystem mit zugehörigen Einkaufswägen.

Die US 2004/0262864 A1 offenbart einen Einkaufswagen, mit einem nach vorne abfallend angeordneten Korb.

Die DE 20 2005 007 300 U1 betrifft einen stapelbaren Einkaufswagen mit einem sich in Fahrtrichtung stetig über die gesamte Korblänge verjüngenden Drahtkorb.

Die DE 20 2009 008 782 U1 offenbart einen Einkaufswagen mit einem sich in Fahrtrichtung stetig über die gesamte Korblänge verjüngenden Drahtkorb sowie eine Stoßfängereinrichtung aus Kunststoff für diesen Einkaufswagen.

Die CH 568 051 betrifft eine Kombination eines Warenwagens und eines Kassentisches, wobei die Vorderwand mittels Gelenken hochschwenkbar ausgeführt ist.

Die Aufgabe der vorliegenden Erfindung besteht darin, einen besseren und kostengünstigeren stapelbaren Wagen aufzuzeigen.

Die Erfindung löst die Aufgabe mit den Merkmalen im Hauptanspruch. Weitere vorteilhafte Ausführungen sind in den Unteransprüchen beschrieben.

Durch die Form des Korbes kann eine geringe Stapeltiefe realisiert werden.

Durch den Einsatz von zahlreichen Kunststoffteilen, die vorzugsweise in einem Spritzgussverfahren hergestellt sind, wie u.a. Schiebegriff, Protektoren und Plattform, kann der Wagen kostengünstig produziert werden.

Zusätzlich wirkt sich das, durch den Einsatz der zahlreichen Kunststoffteile, verringerte Gewicht des Wagens positiv auf das Lenkverhalten aus.

Eine einfache Montage senkt die Montagekosten und kann durch eine verbesserte Verbindungstechnik der Bauteile erzielt werden. Die beiden unteren Protektoren werden auf einfache Art und Weise miteinander am Korb fixiert. Der obere Protektor kann einfach auf den Rand des Korbes aufgesteckt werden. Die übrigen Protektoren an der Rollenanbindung, dem Holm aber auch das Verbindungsteil zwischen Griff und Fahrgestell lassen sich einfach aufstecken bzw. am Fahrgestell anbringen und, sofern notwendig, mit Nieten oder anderen Befestigungsmitteln kostengünstig und dauerhaft sicher am Holm anordnen.

Eine optimale Lenkbarkeit ist durch die Verwendung unterschiedlicher Rollen, vorzugsweise mit verschiedenen Durchmessern, gegeben.

Die Erfindung wird anhand eines Ausführungsbeispiels näher erläutert. Es zeigt
- Fig. 1: einen Transportwagen in perspektivischer Ansicht,
- Fig. 2: denselben Transportwagen in Seitenansicht,
- Fig. 3: ein Schild in Seitenansicht,
- Fig. 4: einen Protektor für einen Holm in perspektivischer Ansicht,
- Fig. 5 a, b: zwei Protektoren am Korb, Ansicht vom Inneren des Korbes in perspektivischer Ansicht,
- Fig. 6: die gleichen zwei Protektoren am Korb, von Außen in perspektivischer Ansicht,
- Fig. 7 a, b: einen unteren Protektor mit Außen- und Innenteil, in perspektivischer Ansicht,
- Fig. 8 a, b: einen Protektor für den Einsatz im Bereich der Rollenanbindung in perspektivischer Ansicht,
- Fig. 9 a-g: einen Protektor am vorderen Bereich des Fahrgestells in verschiedenen Ansichten,
- Fig. 10 a-f: eine Plattform in verschiedenen Ansichten,
- Fig. 11 a: die Anbindung Protektor am vorderen Bereich des Fahrgestells mit Plattform am Gestell des Wagens, in Draufsicht,

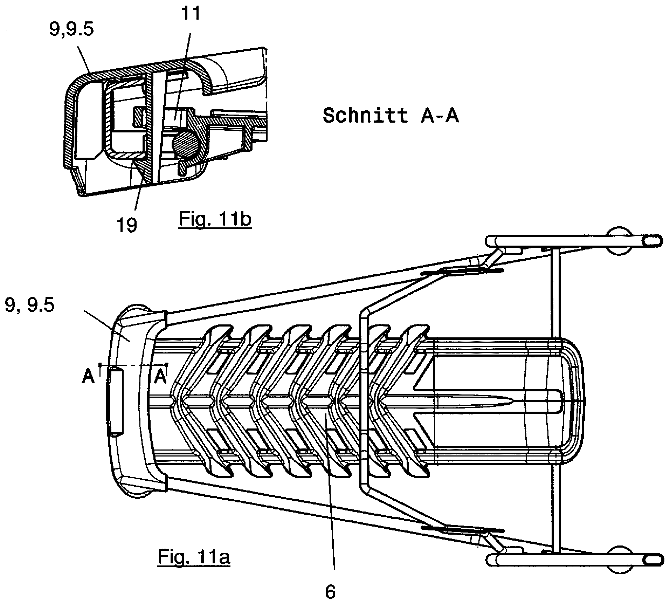

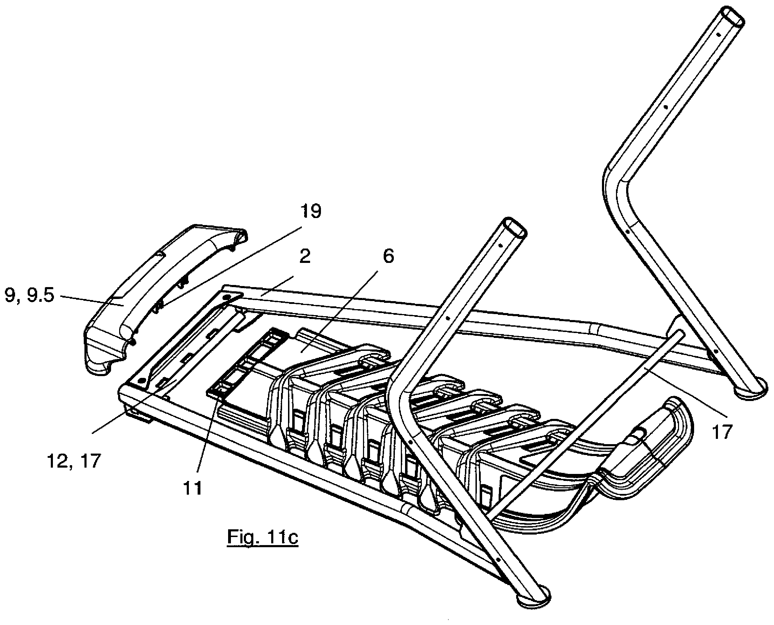

- Fig. 11 b: Protektor, Plattform, Fahrgestell (Schnitt A-A),
- Fig. 11 c: die Anbindung Protektor am vorderen Bereich des Fahrgestells mit Plattform am Gestell des Wagens, in Explosionsdarstellung,

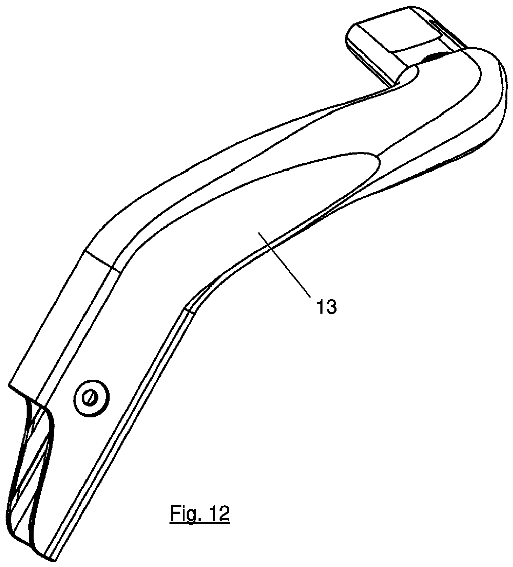

- Fig. 12: ein Verbindungsteil Griff/Fahrgestell in perspektivischer Ansicht, sowie

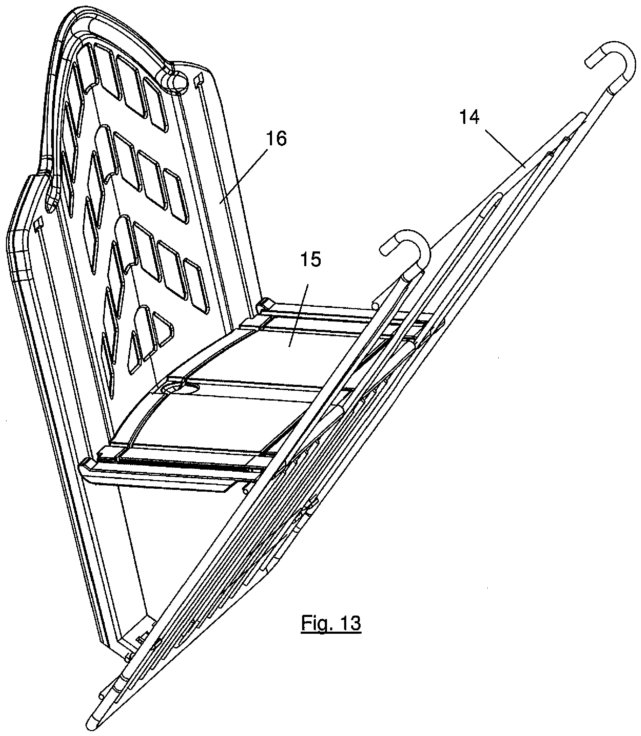

- Fig. 13: eine Klappe mit Kindersitz in perspektivischer Ansicht.

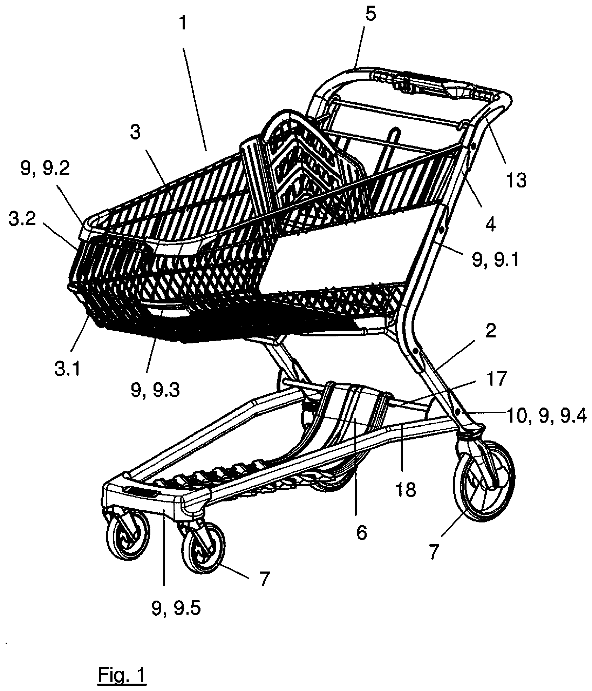

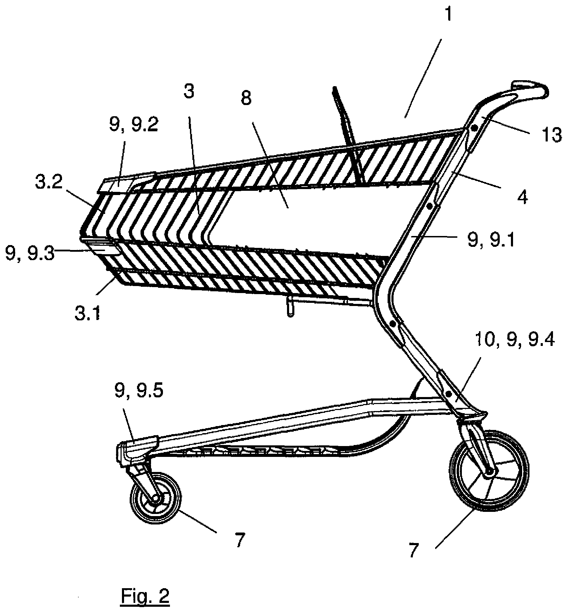

Die Erfindung betrifft einen stapelbaren Transportwagen 1 mit einem Fahrgestell 2 und mit einem aus Drähten gebildeten Korb 3. Das Fahrgestell 2 ist mit zwei Holmen 4 ausgestattet. Der Wagen 1, wie in Figuren 1 und 2 dargestellt, ist in Wagen der gleichen Baureihe stapelbar. Eine Stapeltiefe der Wagen 1 von ca. 240 mm ist hierbei angestrebt und hat sich als vorteilhaft erwiesen. Hierfür ist der Korb 3 entsprechend, wie in den beiden genannten Figuren dargestellt, geformt, d.h. im vorderen Endbereich sich verjüngend geformt. Entsprechend ist die Form der beiden Holme 4 nicht senkrecht, sondern mit einem in Richtung vorderes Korbende gestalteten Winkel α von ca. 110 bis 120° ausgeführt.

An den Holmen 4 ist ein Schiebegriff 5 angeordnet. Dieser kann entweder direkt an den oberen Enden der Holme 4 angebracht sein, oder aber mittels eines Verbindungsteils 13, das zwischen Holm 4 und Schiebegriff 5 vorgesehen ist. Ein solches ist in den Figuren 1, 2 und 12 dargestellt. Je nach Ausführung des Schiebegriffs 5 bietet es sich an, das Verbindungsteil 13 in eine nicht näher dargestellte Öffnung an den Enden des Schiebegriffs 5 einzubringen. Eine Verrasterung zwischen beiden Teilen 5, 13 ist hierbei vorteilhaft und kostengünstig. Das zu dem Holm 4 gerichtete Ende des Verbindungsteils 13 wird vorzugsweise über die Außenseite des Holmes 4 geschoben und zusätzlich gesichert, z.B. mit einer kostengünstigen Nietverbindung. Der Schiebegriff 5 kann mit einem Münzpfandsystem ausgestattet sein. Ferner können weitere Zusatzteile, wie eine Halterung für einen Scanner, ein Mobiltelefon, einen Becher usw. vorgesehen sein. Es hat sich als sinnvoll erwiesen, das Verbindungsteil 13 aus Kunststoff herzustellen. Eine farbliche Anpassung an die im Folgenden beschriebenen Kunststoffteile bietet sich der Optik halber an.

Das Fahrgestell 2 ist mit Rollen 7 ausgestattet. Eine Anzahl von vier Rollen 7 hat sich als sinnvoll erwiesen. Hierbei können herkömmliche Gummirollen Einsatz finden. Es ist aber auch denkbar, Rollen für die Benutzung eines solchen Wagens 1 auf einem Fahrsteig zu verwenden. In dem dargestellten Beispiel, vgl. Figuren 1 und 2, sind die vorderen Rollen 7 kleiner als die hinteren. Ein Durchmesser von ca. 125 mm für die beiden vorderen und von ca. 200 mm für die hinteren Rollen 7 hat sich als vorteilhaft erwiesen. Wie das Beispiel zeigt, werden durch die unterschiedlichen Größen verschiedene Arten von Rollen 7 verwendet.

Bei der Verwendung von Fahrsteigrollen hat sich demgegenüber der Einsatz von vier gleichen Rollen 7 mit einem Durchmesser von ca. 125 mm als vorteilhaft erwiesen.

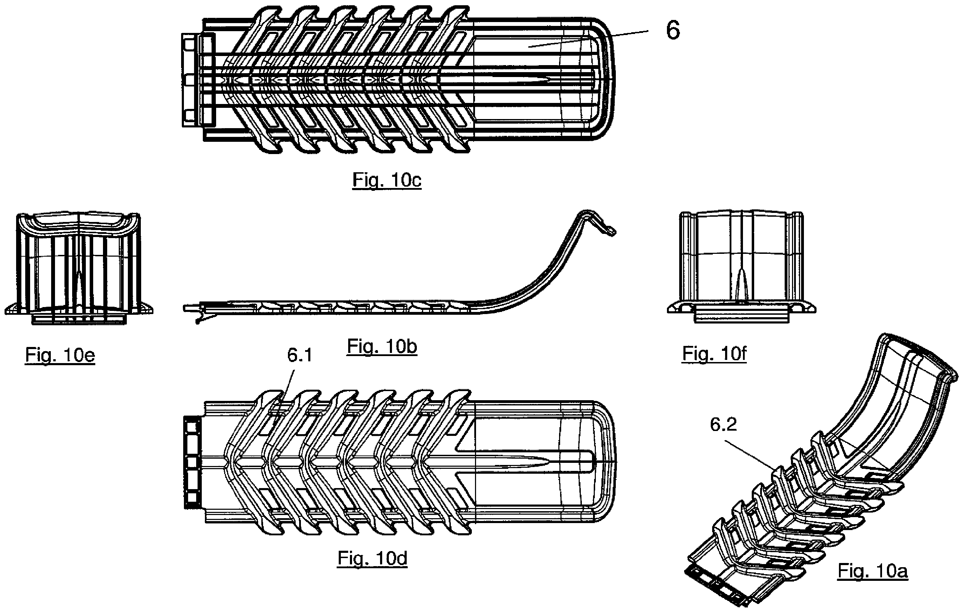

Am Fahrgestell 2, das neben den bereits beschriebenen zwei Holmen 4 ein U-förmiges Untergestell 18 mit vorzugsweise zwei verbindenden Querverbindungen 17 aufweist, ist neben dem Korb 3 eine Plattform 6 angeordnet. Diese Plattform 6 ist aus einem Kunststoff gefertigt. Um die Stapelbarkeit gleicher Wagen 1 zu gewährleisten, ist die Plattform 6 drehbar in Richtung Korb 3 an der Vorderseite des Fahrgestells 2 angeordnet und weiterhin zusätzlich gesichert. Figur 1 zeigt einen Wagen 1, an dem eine solche Plattform 6 angeordnet ist. Zum einen ist sie drehbar an der Vorderseite des Fahrgestells 2 gelagert, insbesondere auf einer Querverbindung 17 wie sie aus Figur 11c zu entnehmen ist, zum anderen lagert die Plattform 6 auf einer weiteren Querverbindung 17, die zwischen den Holmen 4 und dem Untergestell 18 ortsfest angeordnet ist. Die Plattform 6 ist einteilig ausgeführt. Die Figuren 10 a bis f zeigen beispielhaft die verschiedenen Ansichten einer solchen Plattform 6. Die Plattform 6 weist einen waagrechten und einen gebogenen Bereich auf. Es ist eine Vielzahl an Öffnungen 6.1 vorgesehen. Darüber hinaus weist die Plattform 6 eine Vielzahl von Halterungen 6.2 auf, die auf der Plattform 6 befindliche, nicht näher dargestellte Waren gegen ein Verrutschen sichern sollen. Diese Halterungen 6.2 ragen über die Oberfläche der Plattform 6 hinaus. Auch seitlich hat es sich als vorteilhaft erwiesen, dass diese Halterungen 6.2 überstehen. Dies geht beispielsweise aus den Figuren 10a, c, d hervor. Die Plattform 6 ist leicht gebogen. Der Höhenunterschied zwischen den beiden Querverbindungen 17 kann somit optimal überbrückt werden. Zudem ist eine geringe Stapeltiefe gewährleistet. Eine Fläche von ca. 300 x 400 mm für die Plattform 6 hat sich als sinnvoll erwiesen. Hinsichtlich der Belastbarkeit wird von der Beladung mit einer Getränkekiste ausgegangen, die mit ungefähr 25 kg berücksichtigt wird.

In den Figuren 1 und 2 ist der Korb 3 dargestellt, der sich zu den herkömmlichen und bis dato bekannten Körben dahingehend unterscheidet, dass der Korb 3 im unteren Bereich 3.1 nach außen und im oberen Bereich 3.2 nach innen gerichtet ist. Die Anordnung des Korbes 3 erfolgt in bekannter Weise über einen Stützdraht, der an den Holmen 4 angebracht ist, und auf dem der Korb 3 mit seinem Boden aufliegt. Andere Befestigungsarten sind denkbar. Als Korbvolumen ist eine Größe von ca. 125 bis 190 Litern angedacht, andere Volumina sind entsprechend denkbar.

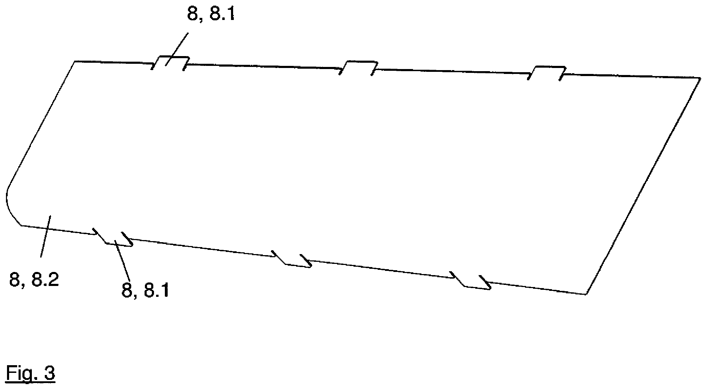

Am Korb 3 kann ein Schild 8 angebracht sein. Es hat sich als sinnvoll erwiesen, dass das Schild 8 flächig ausgeführt ist und an den Seitenwänden des Korbes 3 angebracht ist. Durch den einfachen Formschnitt ist es kostengünstig herstellbar. Ein solches Schild 8 ist in Figur 3 dargestellt. Der Korb 3 ist überwiegend aus senkrecht verlaufenden Drähten gebildet, die mit waagrechten Drähten verbunden sind und dem Korb 3 Stabilität verleihen. Es hat sich als vorteilhaft erwiesen, das Schild 8 mit Verrasterungsnasen 8.1 zu versehen, die ein einfaches Anordnen am Korb 3 ermöglichen. Eine Anzahl von mindestens je drei solcher Nasen 8.1 pro Seite, wie in Figur 3 gezeigt, hat sich als sinnvoll erwiesen. Die Breite der Nasen 8.1 ist dahingehend auszulegen, dass der Abstand zwischen den senkrechten Drähten des Korbes 3 berücksichtigt wird. Begrenzt und gehalten ist das Schild 8 durch einen oben angrenzenden waagrechten Draht des Korbes 3. Durch diese Anordnung zwischen den Drähten ist eine Verrasterung des Schildes 8 am Korb 3 gegeben. Durch die Form des Korbes 3 ist das Schild 8 vorzugsweise entsprechend auf einer Seite mit einer abgerundeten Kante 8.2 versehen. Hierdurch sind die unteren Verrasterungsnasen 8.1 u.U. auch in eine andere Richtung ausgeführt als die oberen Verrasterungsnasen 8.1. Der Wechsel eines solchen Schildes 8 ist einfach. Dieser bietet sich insofern an, wenn das Schild 8 mit Werbung versehen ist, die in vorgegebenen Abständen gewechselt wird. Die Informationen können hierbei auf das Schild 8 gedruckt werden. Es kann auch eine Folie oder ähnliches Verwendung finden, die auf das Schild 8 geklebt wird. Das Schild 8 kann auf der rechten und/oder der linken Seite des Korbes 3 angebracht werden. Als Material bietet sich z.B. ein Kunststoff an.

Der Wagen 1 weist Protektoren 9 aus Kunststoff auf. Am Korb 3 sind ein oberer Protektor 9.2 und ein unterer Protektor 9.3 vorgesehen. Die Figuren 1 und 2 zeigen die Position der beiden Protektoren 9.2, 9.3 am Korb 3.

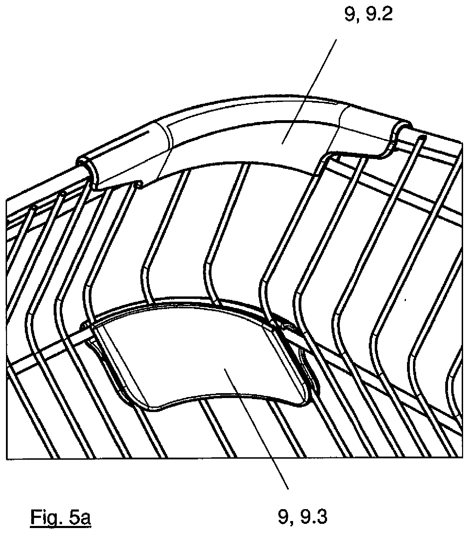

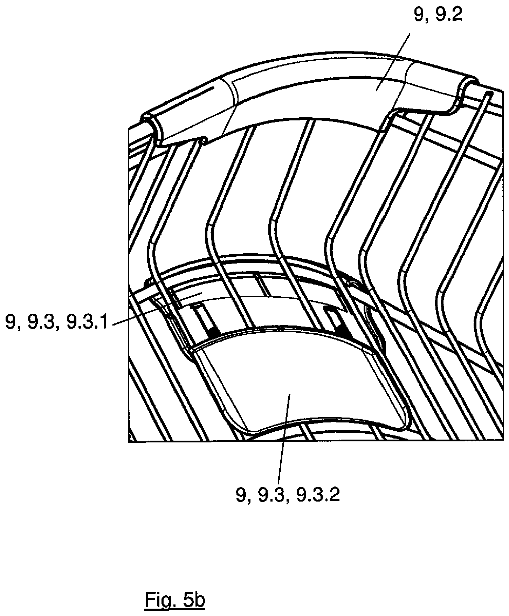

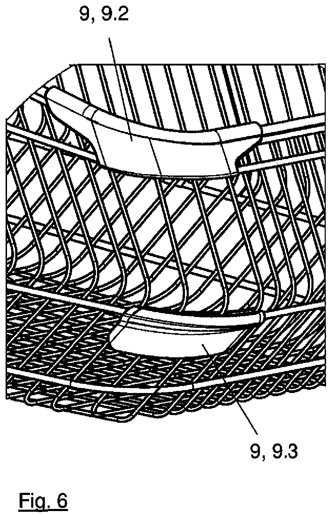

Der obere Protektor 9.2 ist auf dem oberen Umrandungsdraht des Korbes 3 angebracht. In den Figuren 5a, 5b und 6 ist dies im Detail dargestellt. Der obere Protektor 9.2 wird an beiden oberen abgerundeten Eckbereichen des Korbes 3 aufgeklipst.

Der untere Protektor 9.3 ist auf mittlerer Höhe des Korbes 3 an einem waagrecht ausgeführten Draht des Korbes 3 angeordnet. Auch dieser Protektor 9.3 schützt andere Gegenstände vor einem ungewollten Schaden, der u.U. durch ein unsorgfältiges Fahren mit dem Wagen 1 entstehen kann. Der Protektor 9.3 ist für ein einfaches Anbringen vorzugsweise zweiteilig gebildet. Der Protektor 9.3 am Korb 3 ist aus einem Außenteil 9.3.1 und einem Innenteil 9.3.2 gebildet. Beide Teile 9.3.1, 9.3.2 greifen ineinander und sind wechselbar am Korb angebracht. In einer weiterführenden Variante ist die Verbindung beider Teile 9.3.1, 9.3.2 durch die Konstruktion derart hergestellt, dass ein Lösen des Protektors 9.3 vom Wagen 1 nur durch Zerstörung des Protektors 9.3 erfolgen kann.

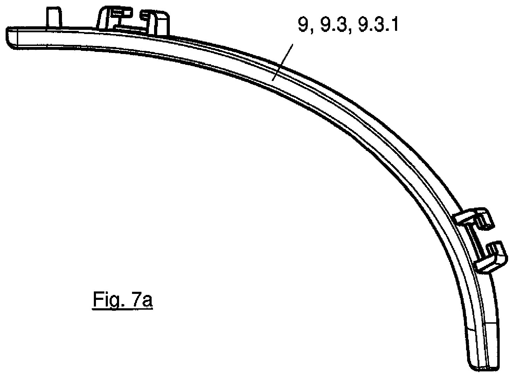

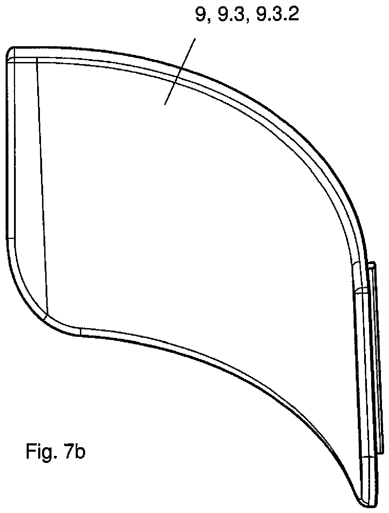

Figur 5a zeigt den Protektor 9.3 zusammengefügt. Figur 5b verdeutlicht, dass der Protektor 9.3 zweiteilig, aus einem Außenteil 9.3.1 und einem Innenteil 9.3.2, gebildet ist. Das Innenteil 9.3.2 weist Schienen auf, die in Führungen im Außenteil 9.3.1 geschoben werden können. Dadurch ist ein einfaches Anbringen, aber auch ein schneller Austausch des Protektors 9.3 gegeben. Aufgrund der Form des Korbes 3 sind die beiden Teile 9.3.1 und 9.3.2, die den Protektor 9.3 bilden, entsprechend angepasst, d.h. insbesondere gebogen ausgeführt. In den Figuren 7a und 7b ist dies nochmals verdeutlicht. Auch geht daraus hervor, dass das Außenteil 9.3.1 zwei Führungen aufweist, die zur Aufnahme der beiden am Innenteil 9.3.2 vorgesehenen Schienen vorgesehen sind. Es hat sich als sinnvoll erwiesen, dass die Führungen zum Boden des Korbes 3 hin konisch ausgeführt sind. Dadurch kann beim Erreichen der Endposition eine Klemmung zustande kommen. Durch diese Art des Zusammenfügens beider Bauteile 9.3.1 und 9.3.2 können Fertigungstoleranzen der Drähte im Bereich der Ecken des Korbes 3 ausgeglichen werden.

Zur Sicherung der Plattform 6 am Untergestell 18 im vorderen Bereich des Wagens 1 ist ein Protektor 9.5 vorgesehen. Dieser dient darüber hinaus als Stoßleiste und verhindert das Beschädigen von Gegenständen in einem Supermarkt.

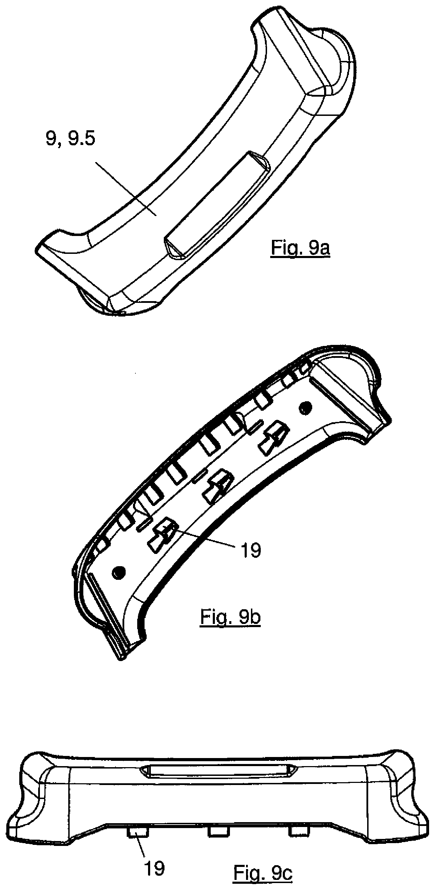

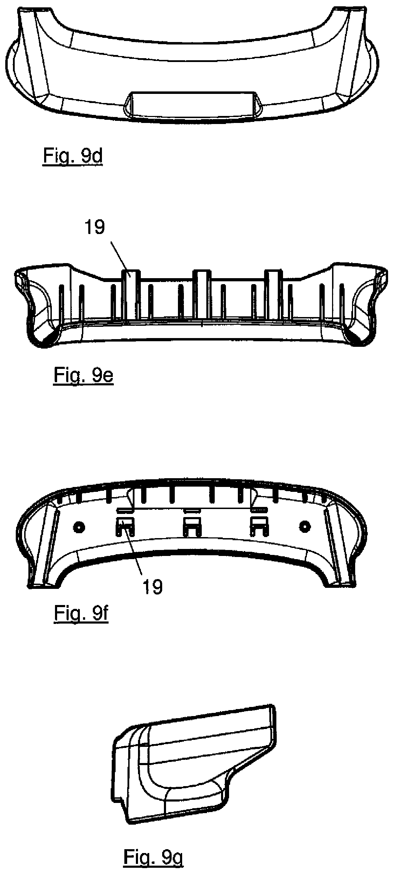

Die Figuren 9a bis g zeigen verschiedene Ansichten des Protektors 9.5. Wie in Figur 11c gezeigt, wird der Protektor 9.5 auf das Fahrgestell 2 gesteckt. Das Fahrgestell 2 weist einen waagrechten Draht 12 auf. Dieser dient zum einen als Querverbindung 17, zum anderen als Aufnahme von Plattform 6 und Protektor 9.5. Zunächst wird die Plattform 6 positioniert, dann wird der Protektor 9.5 darübergelegt. Der Protektor 9.5 umschließt den waagrechten Draht 12 des Fahrgestells 2. Dieser Draht 12 ist als Drehachse für die Plattform 6 vorgesehen. U.U. kann es sich als sinnvoll erweisen, die Plattform 6 mit einer nicht näher dargestellten Drahtunterstützung zu versehen.

Ferner bietet es sich an, eine Fixierung von Protektor 9.5 und Plattform 6 vorzusehen. Der Protektor 9.5 weist zum Fixieren der Plattform 6 Rastmittel 19 auf. Diese rasten in Öffnungen 11 der Plattform 6 ein und schaffen eine sichere Verbindung. Eine Anzahl von drei Rastmitteln 19 sowie drei Öffnungen 11 hat sich als sinnvoll erwiesen. Eine andere Anzahl wäre denkbar.

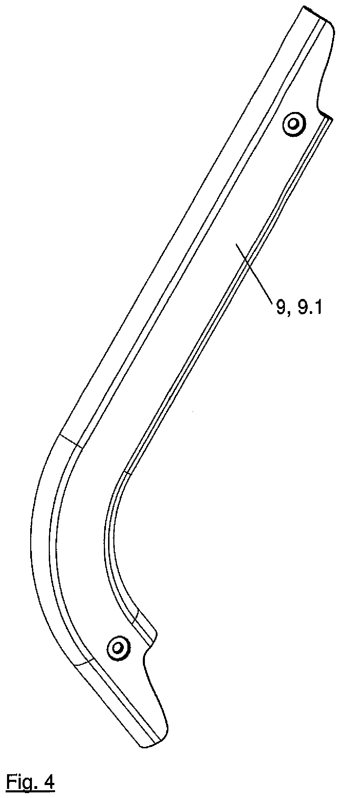

Ferner sind die Holme 4 mit Protektoren 9.1 versehen. In den Figuren 1 und 2 sind die Protektoren 9.1 dargestellt, angeordnet an den Holmen 4. Figur 4 zeigt einen Protektor 9.1. Dieser wird vorzugsweise mit nicht näher dargestellten Befestigungsmitteln an dem Holm 4 angebracht. Es hat sich als sinnvoll erwiesen, einen Protektor 9.1 pro Holm 4 vorzusehen. Der Protektor 9.1 ist entsprechend der Form des Holmes 4 zu fertigen.

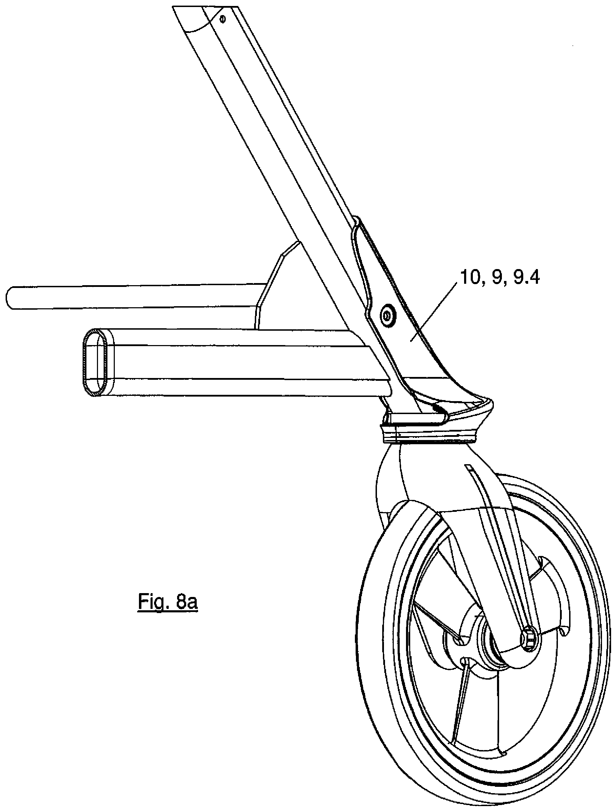

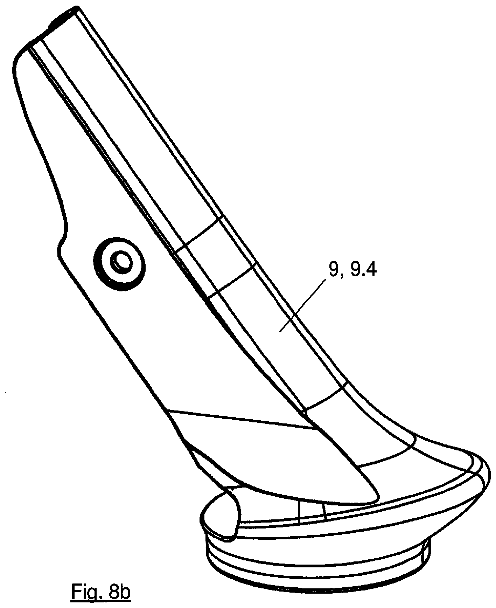

Ein weiterer Protektor 9.4 ist im Bereich der Rollenanbindung 10 vorgesehen. Auch dies geht aus den Figuren 1 und 2 hervor. Die Figuren 8a, b zeigen den Protektor 9.4 im Detail. Er kann auf die Rollenanbindung 10 gesetzt und mittels Befestigungsmitteln gesichert werden. Diese Protektoren 9.4 können wechselbar oder ortsfest angeordnet werden. Ein Wechsel, z.B. wenn der Protektor 9.4 beschädigt ist, kann auf einfache Art durchgeführt werden. Dieser Protektor 9.4 ist vorzugsweise an beiden hinteren Rollenanbindungen 10 am Fahrgestell 2 angebracht.

In Figur 13 ist eine Kindersitzanordnung dargestellt. Diese weist eine Klappe 14 des Korbes 3 auf. Sie ist mit Öffnungen für die Beine eines Kleinkindes versehen. Ferner ist ein Kindersitz 15 und ein Rückenteil 16 an der Klappe 14 beweglich angebracht. Vorzugweise sind Kindersitz 15 und Rückenteil 16 aus Kunststoff gebildet. Im oberen Bereich des Rückenteils 16 ist eine raupenartiger Vertiefung als Versteifung vorgesehen. Ferner besteht die Möglichkeit, eine weitere Klappe anzuordnen, so dass die Öffnungen für die Beine eines Kindes verschlossen werden können und die Kindersitzanordnung als zusätzliche Warenablage genutzt werden kann.

Ferner können am Wagen 1 Zubehörbauteile wie z.B. Kleinartikelschalen, Trennwände oder Einsätze, Taschenhaken oder sonstige Elemente Einsatz finden.

### Bezugszeichenliste

- 1: Transportwagen, Wagen
- 2: Fahrgestell
- 3: Korb
- 3.1: unterer Bereich (Korb)
- 3.2: oberer Bereich (Korb)
- 4: Holm
- 5: Schiebegriff, Griff
- 6: Plattform
- 6.1: Öffnung
- 6.2: Halterung
- 7: Rolle
- 8: Schild
- 8.1: Verrasterungsnase
- 8.2: Abgerundete Kante
- 9: Protektoren
- 9.1: Protektor (Holm)
- 9.2: oberer Protektor (Korb), Protektor oben
- 9.3: unterer Protektor (Korb), Protektor unten
- 9.3.1: Außenteil
- 9.3.2: Innenteil
- 9.4: Protektor (Rollenanbindung)
- 9.5: Protektor (vorderer Bereich Fahrgestell)
- 10: Rollenanbindung
- 11: Öffnungen
- 12: Draht
- 13: Verbindungsteil Griff/Fahrgestell
- 14: Klappe (Korb)
- 15: Kindersitz
- 16: Rückenteil (Kindersitz)
- 17: Querverbindung
- 18: U-förmiges Untergestell
- 19: Rastmittel

## Patentansprüche

1. Stapelbarer Transportwagen (1) mit einem Fahrgestell (2) und mit einem aus Drähten gebildeten Korb (3), wobei das Fahrgestell (2) mit zwei Holmen (4) ausgestattet ist, und wobei an den Holmen (4) ein Schiebegriff (5) angeordnet ist, wobei das Fahrgestell (2) mit Rollen (7) ausgestattet ist, und wobei am Fahrgestell (2) eine Plattform (6) angebracht ist, **dadurch gekennzeichnet, dass** die vordere Wandung des Korbes (3) einen unteren Bereich (3.1) und einen oberen Bereich (3.2) aufweist, wobei der untere Bereich (3.1) und der obere Bereich (3.2) bezogen auf die Seitenansicht im Wesentlichen eine identische Kantenlänge aufweisen, wobei aus Sicht vom Korbinneren die vordere Wandung des Korbes (3) im unteren Bereich (3.1) ausgehend vom Boden des Korbes zunächst nach außen gerichtet ist und im oberen Bereich (3.2) nach innen gerichtet und zurück in Richtung Korbinneres geführt ist, wobei der obere Bereich (3.2) ausgehend vom Anschluss an den unteren Bereich (3.1) entgegengesetzt zum unteren Bereich (3.1) zurück in Richtung Korbinneres geneigt ist, so dass der Korb (3) im vorderen Endbereich verjüngend geformt ist, und wobei die Holme (4) mit einem in Richtung auf das vordere Korbende gestalteten Winkel von ca. 110° bis 120° ausgeführt sind.

2. Stapelbarer Transportwagen nach Anspruch 1, **dadurch gekennzeichnet, dass** am Korb (3) ein Schild (8) angebracht ist.

3. Stapelbarer Transportwagen nach einem der vorhergehenden Ansprüche, **dadurch gekennzeichnet, dass** der Wagen (1) mit Protektoren (9) aus Kunststoff versehen ist.

4. Stapelbarer Transportwagen nach Anspruch 3, **dadurch gekennzeichnet, dass** am Korb (3) Protektoren (9.2, 9.3) vorgesehen sind.

5. Stapelbarer Transportwagen nach Anspruch 4, **dadurch gekennzeichnet, dass** obere Protektoren (9.2) am Korb (3) oben und untere Protektoren (9.3) am Korb (3) auf mittlerer Höhe vorgesehen sind.

6. Stapelbarer Transportwagen nach Anspruch 4 oder Anspruch 5, **dadurch gekennzeichnet, dass** der Protektor (9.3) am Korb (3) aus einem Außenteil (9.3.1) und einem Innenteil (9.3.2) gebildet ist, wobei beide Teile (9.3.1, 9.3.2) ineinandergreifen.

7. Stapelbarer Transportwagen nach einem der Ansprüche 3 bis 6, **dadurch gekennzeichnet, dass** Protektoren (9.1) an den Holmen (4) und Protektoren (9.4) im Bereich der Rollenanbindung (10) vorgesehen sind, die wechselbar oder ortsfest angebracht sind.

8. Stapelbarer Transportwagen nach einem der Ansprüche 4 bis 7, **dadurch gekennzeichnet, dass** ferner ein Protektor (9.5) am vorderen Bereich des Fahrgestells (2) vorgesehen ist, der wechselbar angebracht ist, wobei der Protektor (9.5) ferner einen waagrechten Draht (12) des Fahrgestells (2) umschließt, der als Drehachse für die Plattform (6) vorgesehen ist.

9. Stapelbarer Transportwagen nach Anspruch 8, **dadurch gekennzeichnet, dass** der Protektor (9.5) zum Fixieren der Plattform (6) Rastmittel (19) aufweist, die in Öffnungen (11) der Plattform (6) einrasten und eine sichere Verbindung schaffen.

10. Stapelbarer Transportwagen nach einem der vorhergehenden Ansprüche, **dadurch gekennzeichnet, dass** die Plattform (6) aus einem Kunststoff gefertigt ist und drehbar in Richtung Korb (3) an der Vorderseite des Fahrgestells (2) angeordnet ist und zusätzlich gesichert ist.

## Claims

1. A nestable trolley (1) having a wheel frame (2) and having a basket (3) formed from wires, wherein the wheel frame (2) is equipped with two uprights (4), and wherein a pushing handle (5) is arranged on the uprights (4), wherein the wheel frame (2) is equipped with casters (7), and wherein a platform (6) is attached to the wheel frame (2), **characterised in that** the front wall of the basket (3) has a lower region (3.1) and an upper region (3.2), wherein the lower region (3.1) and the upper region (3.2) have a substantially identical edge length in the lateral view, wherein viewed from the basket interior, the front wall of the basket (3) is in the lower region (3.1) first of all directed outwards starting from the bottom of the basket and is in the upper region (3.2) directed inwards and guided back in the direction of the basket interior, wherein starting from the connection to the lower region (3.1), the upper region (3.2) is inclined back in the direction of the basket interior in an opposite direction to the lower region (3.1), so that the basket (3) tapers in the front end region, and wherein the uprights (4) are designed with an angle from approximately 110° to 120° in the direction of the front basket end.

2. A nestable trolley according to claim 1, **characterised in that** a plate (8) is attached to the basket (3).

3. A nestable trolley according to any one of the preceding claims, **characterised in that** the trolley (1) is provided with protectors (9) of plastics material.

4. A nestable trolley according to claim 3, **characterised in that** protectors (9.2, 9.3) are provided on the basket (3).

5. A nestable trolley according to claim 4, **characterised in that** upper protectors (9.2) are provided at the top of the basket (3) and lower protectors (9.3) are provided half way up the basket (3).

6. A stackable trolley according to claim 4 or claim 5, **characterised in that** the protector (9.3) on the basket (3) is formed from an outer part (9.3.1) and an inner part (9.3.2), wherein both parts (9.3.1, 9.3.2) engage one another.

7. A nestable trolley according to any one of claims 3 to 6, **characterised in that** protectors (9.1) on the uprights (4) and protectors (9.4) in the region of the caster connection (10) are provided and are attached so as to be exchangeable or fixed.

8. A nestable trolley according to any one of claims 4 to 7, **characterised in that** furthermore at the front region of the wheel frame (2) there is provided a protector (9.5) which is exchangeably attached, wherein the protector (9.5) furthermore encloses a horizontal wire (12) of the wheel frame (2), which wire is provided as a rotational axis for the platform (6).

9. A nestable trolley according to claim 8, **characterised in that** the protector (9.5) has locking means (19) for fixing the platform (6) in place, which locking means engage openings (11) of the platform (6) and create a secure connection.

10. A nestable trolley according to any one of the preceding claims, **characterised in that** the platform (6) is manufactured from a plastics material and is arranged on the front end of the wheel frame (2), in a manner rotatable in the direction of the basket (3), and additionally secured.

## Revendications

1. Chariot de transport imbricable ou pouvant être stocké par imbrication (1) ayant un châssis (2) et un panier (3) formé de fils métalliques, où le châssis (2) est doté de deux montants (4), et où une poignée de poussée (5) est agencée sur les montants (4), où le châssis (2) est doté de roues (7), et où une plate-forme (6) est montée sur le châssis (2), **caractérisé en ce que** la paroi avant du panier (3) présente une zone inférieure (3.1) et une zone supérieure (3.2), où la zone inférieure (3.1) et la zone supérieure (3.2) présentent une longueur de côté sensiblement identique lorsqu'elles sont observées selon une vue de côté, où selon une vue depuis l'intérieur du panier, la paroi avant du panier (3) est tout d'abord orientée vers l'extérieur dans la zone inférieure (3.1) s'étendant depuis le fond du panier et est orientée vers l'intérieur dans la zone supérieure (3.2) et repart en direction de l'intérieur du panier, où la zone supérieure (3.2) s'étendant depuis la jonction avec la zone inférieure (3.1) en sens inverse de la zone inférieure (3.1) est inclinée en direction de l'intérieur du panier, de sorte que le panier (3) se rétrécit dans la zone d'extrémité avant, et où les montants (4) sont courbés selon un angle d'environ 110° à 120° en direction de l'extrémité avant du panier.

2. Chariot de transport pouvant être stocké par imbrication selon la revendication 1, **caractérisé en ce qu'**une plaque (8) est montée sur le panier (3).

3. Chariot de transport pouvant être stocké par imbrication selon l'une des revendications précédentes, **caractérisé en ce que** le chariot (1) est doté de protecteurs (9) en plastique.

4. Chariot de transport pouvant être stocké par imbrication selon la revendication 3, **caractérisé en ce que** des protecteurs (9.2, 9.3) sont prévus sur le panier (3).

5. Chariot de transport pouvant être stocké par imbrication selon la revendication 4, **caractérisé en ce que** des protecteurs supérieurs (9.2) sont prévus sur le haut du panier (3) et des protecteurs inférieurs (9.3) sont prévus à mi-hauteur du panier (3).

6. Chariot de transport pouvant être stocké par imbrication selon la revendication 4 ou la revendication 5, **caractérisé en ce que** le protecteur (9.3) sur le panier (3) est constitué d'une partie extérieure (9.3.1) et d'une partie intérieure (9.3.2), où les deux parties (9.3.1, 9.3.2) s'emboîtent.

7. Chariot de transport pouvant être stocké par imbrication selon l'une des revendications 3 à 6, **caractérisé en ce que** des protecteurs (9.1) sont prévus sur les montants (4) et des protecteurs (9.4) sont prévus sur les raccords de roue (10), lesquels protecteurs sont montés de sorte à pouvoir être remplacés ou à être fixes.

8. Chariot de transport pouvant être stocké par imbrication selon l'une des revendications 4 à 7, **caractérisé en ce qu'**un protecteur (9.5) est en outre prévu sur la zone avant du châssis (2), lequel protecteur est monté de sorte à pouvoir être remplacé, où le protecteur (9.5) entoure en outre un fil métallique horizontal (12) du châssis (2), lequel fil est prévu à titre d'axe de rotation pour la plate-forme (6).

9. Chariot de transport pouvant être stocké par imbrication selon la revendication 8, **caractérisé en ce que** le protecteur (9.5) présente des moyens d'encliquetage pour fixer la plate-forme (6), lesquels s'encliquètent dans des orifices (11) de la plate-forme (6) et assurent une liaison sûre.

10. Chariot de transport pouvant être stocké par imbrication selon l'une des revendications précédentes, **caractérisé en ce que** la plate-forme (6) est constituée d'une matière plastique et est agencée de sorte à pouvoir pivoter du côté avant du châssis (2) en direction du panier (3) et est en outre sécurisée.
